# EUROPEAN PATENT SPECIFICATION

(11) **EP 2 856 028 B1**
(45) Date of publication and mention of the grant of the patent: **11.03.2020**
(21) Application number: 13725165.8
(22) Date of filing: 27.05.2013
(51) Int. Cl.: F23N 1/00, F16K 31/06

(54) **GAS COOKER AND GAS FLOW CONTROL DEVICE**
GASHERD UND GASSTEUERVORRICHTUNG
GAZINIÈRE ET DISPOSITIF DE RÉGULATION D'ÉCOULEMENT DE GAZ

(30) Priority: 28.05.2012 CN 201210176448
(43) Date of publication of application: 08.04.2015
(73) Proprietor: BSH Hausgeräte GmbH, 81739 München (DE)
(72) Inventor: KOCH, Thomas, 13591 Berlin (DE); LI, Xingzhou, Nanjing City Jiangsu 210000 (CN); REDONDO MORITZ, Jose, E-39610 Guarnizo-El Astillero (ES); Jinhua Wu, 210000 Nanjing City Jiangsu Province (CN)
(86) International application number: PCT/EP2013/060859
(87) International publication number: WO 2013/178582

(56) References cited:
- WO-A1-85/03761
- WO-A2-2009/040115
- US-A- 3 125 321
- US-A- 3 470 892
- US-A- 3 887 162
- US-A- 5 487 407
- US-A1- 2006 102 234
- US-A1- 2011 183 277

## Description

### BACKGROUND OF THE INVENTION

### Field of the Invention

The present invention relates to the field of gas cookers, and in particular, to a gas cooker and a gas flow control technology.

### Related Art

Gas cookers are common household ranges in people's daily life, and mainly use combustible gases as fuel for combustion. Based on different combustible gas types, the gas cookers are divided into multiple classes such as liquefied petroleum gas cookers, manual coal gas cookers, and natural gas cookers. Although the current gas cooker technology is very mature, a lot of problems still remain to be solved in the field of gas cookers. For example, if the gas pressure is unstable or the gas components are uneven, the gas flow will be unstable, causing the flame to be unstable. For another example, the current gas cooker has only few grades, which can no longer meet user requirements.

Patent document WO 85/03761 A1 describes a gas-fired apparatus for domestic purposes. A solenoid valve is controlled in response to temperature measured by a thermistor. A valve element of the solenoid valve is moved using a coil winded around an armature shaft.

Patent document WO 2009/040115 A2 describes a gas cooking appliance with a regulation means that regulates a gas flow of a fuel gas using an actuator. In an operation mode, the fuel gas is supplied intermittently to a gas burner, thereby providing an intermittent flame.

Unless otherwise supported by sufficient evidence, the prior art described herein does not mean acknowledging that the prior art is known to persons of ordinary skill in the art before the filing date of the present application.

### SUMMARY OF THE INVENTION

In view of at least one technical problem described above, the present invention is directed to a novel gas cooker according to claim 11 and a gas flow control device according to claim 1.

A gas flow control device in accordance with claim 1 is provided. In this way, even if the gas flow is unstable, by means of the technical solution of the present invention, the gas flow finally flowing to the burner is relatively stable.

The control valve includes a valve body, a valve core, a reset device, and an electromagnetic converting device; the valve body includes an gas inlet and an gas outlet; when the control valve is not opened, the valve core butts against an inner wall of the valve body under the action of the reset device, and then closes an airflow passage by which the gas flowing in from the gas inlet flows toward the gas outlet; the control module is used for controlling power supplied to the electromagnetic converting device; the electromagnetic converting device is used for generating magnetism after receiving the supplied power, drawing the valve core to move, and then opening the airflow passage by which the gas flowing in from the gas inlet flows toward the gas outlet; and after the supplied power disappears, the magnetism disappears, and the valve core again butts against the inner wall of the valve body under the action of the reset device. The disappearance of supplied power herein should be understood in a broad sense, which not only includes the case where the supplied power completely disappears, but also includes the case where the supplied power is insufficient to generate magnetism for drawing the valve core.

Optionally, the electromagnetic converting device includes a coil.

Optionally, the coil winds around the valve body.

A containing portion adapting to the shape of the valve core is disposed on the inner wall of the valve body, and the containing portion is disposed between the gas inlet and the gas outlet.

Optionally, the reset device includes a spring or rubber or elastic plastic.

The valve core is of a spherical structure.

Optionally, the control module is used for supplying a periodically changing current to the electromagnetic converting device.

Optionally, the control module is used for supplying a pulse-type direct current to the electromagnetic converting device.

Optionally, the control module is used for supplying an alternating current to the electromagnetic converting device.

The valve body includes a bushing and a nozzle; the gas outlet is disposed on the nozzle, and the gas inlet is disposed on the bushing; and the electromagnetic converting device is disposed on the bushing.

Optionally, the bushing is made of a plastic material.

Optionally, an outer surface of the valve core is disposed with a coating, and the coating is a plastic or rubber or epoxy coating.

Optionally, the number of control valves is at least two; and bore diameters of the gas outlets of the control valves are different from each other. In this way, when a single control valve or a combination of multiple control valves are opened, different grades can be generated; moreover, by properly setting the bore diameters of the gas outlets of the control valves, the gas flow can be smoothly switched between two adjacent grades.

The control module is further used for controlling a frequency of a periodic opening and closing operation of the control valve. In this way, by controlling the frequency of the periodic opening and closing operation of the control valve, the gas flow is adjusted, thereby generating different grades. Especially, fine adjustment of the gas flow is conveniently achieved.

The present invention further provides a gas cooker, and the gas flow control device described above is disposed thereon.

### BRIEF DESCRIPTION OF THE DRAWINGS

The following drawings are merely used for exemplary description and illustration, and are not intended to limit the scope of the present invention, where:
FIG. 1 is a schematic structural view of an embodiment of a gas flow control device for a gas cooker according to the present invention;
FIG. 2 is a schematic structural view of a control valve of an embodiment of a gas flow control device in FIG. 1;
FIG. 3 is another schematic structural view of a control valve of an embodiment of a gas flow control device in FIG. 1;
FIG. 4 is an oscillogram of a current supplied to an electromagnetic converting device by a control module of an embodiment of a gas flow control device in FIG. 1;
FIG. 5 is an oscillogram of a current supplied to an electromagnetic converting device by a control module of another embodiment of a gas flow control device for a gas cooker according to the present invention; and
FIG. 6 is a schematic view of an application state of still another embodiment of a gas flow control device for a gas cooker according to the present invention.

### Description of reference numerals in the drawings:

1-fuel gas inlet, 2-fuel gas outlet, 3-control valve, 4-valve core, 5-coil, 6-spring, 7-support portion, 8-gas inlet, 9-gas outlet, 10-bushing, 11-nozzle, 12-main gas inlet pipe, 13-containing portion, 14-seal ring, 15-inner ring flame cover, 16-outer ring flame cover

### DETAILED DESCRIPTION OF THE EMBODIMENTS

To make the objective, solution and beneficial effect of the present invention clearer, the present invention is further described below with reference to the accompanying drawings and exemplary embodiments. It should be noted that in the following description of the exemplary embodiments, the same or similar features have the same mark in the drawings. In addition, some drawing may be not precise enough, and in this case, the embodiment shall subject to the text description.

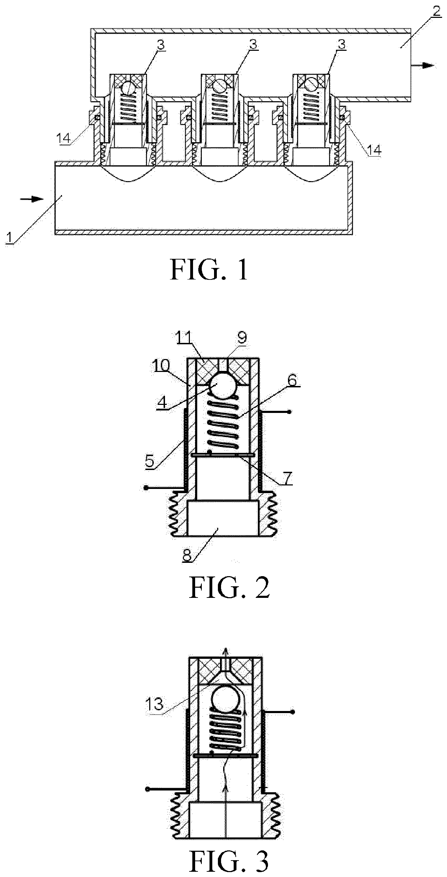

As shown in FIG. 1 an embodiment of a gas flow control device for a gas cooker is provided, which includes a fuel gas inlet 1, a fuel gas outlet 2, a control module (not shown in the figure), and three control valves 3. In addition, to improve the sealing effect, the three control valves 3 are each provided with a seal ring 14.

The three control valves 3 are of the same mechanical structure. As shown in FIG. 2 and FIG. 3, each control valve 3 includes a valve body, a valve core 4, a reset device, and an electromagnetic converting device. The valve core 4 is of a spherical structure, and an outer surface of the valve core 4 is provided with an epoxy coating. The valve body includes an gas inlet 8, an gas outlet 9, a bushing10, and a nozzle 11. The bushing10 is made of a high-temperature resistant plastic material and is formed through an integral forming process. The nozzle 11 is made of brass. The gas outlet 9 is disposed on the nozzle 11, and the gas inlet 8 is disposed on the bushing 10. In addition, the bushing 10 is further provided with threads, and is used for fixedly connecting the bushing 10 on an gas inlet pipe. A containing portion 13 adapting to the shape of the valve core 4 is disposed on the inner wall of the valve body, and the containing portion 13 is disposed between the gas inlet 8 and the gas outlet 9. The adapting should be construed as follows: the valve core 4 can be at least partly contained in the containing portion 13, thereby closing an airflow passage by which the gas flows through the control valve 3 (namely, an airflow passage by which the gas flowing in from the gas inlet 8 flows towards the gas outlet 9). The electromagnetic converting device includes a coil 5, and the coil 5 winds around the bushing 10. The reset device includes a spring 6 and a support portion 7; an end of the spring 6 butts against the support portion 7, and the other end of the spring 6 butts against the valve core 4. The support portion 7 is a thermal ring mounted inside the bushing10.

The control module is used for opening the control valves 3. It should be noted that the wording "opening" should not be taken literally, but be understood with reference to the specification. When some control valve 3 is opened, gas sequentially flows through the fuel gas inlet 1, the gas inlet 8 of the control valve 3, and the gas outlet 9 of the control valve 3, then flows toward the fuel gas outlet 2, and finally flows to the burner; and the control valve 3 alternately opens and closes an airflow passage by which the gas flows through the control valve 3. When the control valve 3 is not opened, the valve core 4 butts against an inner wall of the valve body under the action of the reset device, so as to close an airflow passage by which the gas flowing in from the gas inlet 8 flows toward the gas outlet 9.

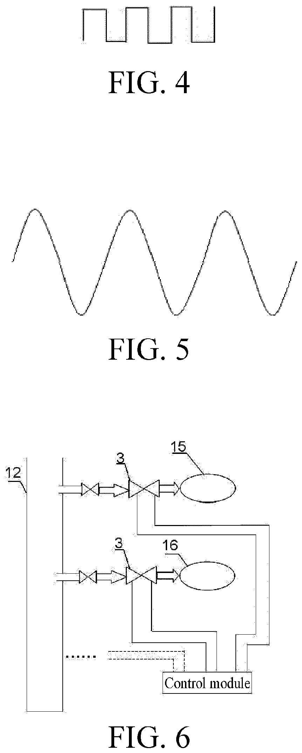

Specifically, when some control valve 3 is opened, the control module supplies a periodically changing pulse-type direct current to the electromagnetic converting device of the control valve 3, and the corresponding current oscillogram is shown in FIG. 4. It can be seen that the supplied current is intermittent; the current is turned on, and cut off, and then turned on again. This cycle is repeated. When the current is turned on, the electromagnetic converting device generates magnetism, drawing the valve core 4 to move (undoubtedly, the valve core 4 should be made of a material capable of being attracted by magnetism). The valve core 4 squeezes the spring 6, and is separated from the containing portion 13, hence opening the airflow passage by which the gas flowing in from the gas inlet 8 flows towards the gas outlet 9, as shown in FIG. 3 (in FIG. 3, the arrow direction is the flowing direction of the gas flow). When the current is cut off, the magnetism of the electromagnetic converting device disappears. At this time, the valve core 4 butts against interior of the containing portion 13 again under the action of the reset device, thereby closing the airflow passage by which the gas flowing in from the gas inlet 8 flows toward the gas outlet 9, as shown in FIG. 2. In this way, it is easily implemented that the control valve 3 alternately opens and closes the airflow passage by which the gas flows through the control valve 3. It can be seen that the frequency of the periodic opening and closing action of the control valve 3 is the same as the frequency of the above pulse-type direct current. Therefore, the control module can control the frequency of the supplied pulse-type direct current, so as to indirectly control the frequency of the opening and closing of the airflow passage.

The bore diameters of the gas outlets 9 of the three control valves 3 are different from each other. In this way, when a single control valve 3 or a combination of multiple control valves 3 are opened, different grades can be generated.

The exemplary embodiment of the present invention is described above, and some technical features may be modified or replaced to obtain other embodiments. For example, the control module may also supply the alternating current shown in FIG. 5 to the electromagnetic converting device. In another example, the number of the control valves may be one, two, four or more. In still another example, the control module may also provide non-periodically changing current to the electromagnetic converting device. In still another example, the valve core may be of other feasible structures such as a tapered structure. In still another example, the bushing may be fixedly connected on the gas inlet pipe through interference fitting. In still another example, the support portion may also be a protruding part extended from the bushing. In still another example, the reset device may use rubber or elastic plastic. In still another example, the diameters of the gas outlets of the control valves are the same or partially the same. In still another example, the technical solution of the present invention is also applicable to the situation where gas is supplied to multiple ring flame covers respectively. FIG. 6 is a schematic structural view of the technical solution of the present invention being applied to the situation where gas is supplied to an inner ring flame cover 15 and an outer ring flame cover 16 respectively. As shown in FIG. 6, gas of the inner ring flame cover 15 and the outer ring flame cover 16 is supplied by a main gas inlet pipe 12, and gas supply pipes of the inner ring flame cover 15 and the outer ring flame cover 16 are each provided with a control valve 3; the control valves 3 are uniformly controlled by one control module.

## Claims

1. A gas flow control device for a gas cooker, comprising:
a fuel gas inlet (1), a fuel gas outlet (2), a control module and at least one control valve (3);
wherein the control valve (3) comprises a valve body, a valve core (4), a reset device and an electromagnetic converting device;
wherein the valve body comprises an gas inlet (8), an gas outlet (9), a bushing (10) and a nozzle (11);
wherein the electromagnetic converting device is disposed on the bushing (10);
wherein
the control module is used for opening the control valve (3) and controlling power supplied to the electromagnetic converting device;
and the control module is further used for controlling a frequency of a periodic opening and closing operation of the control valve (3);
wherein the at least one control valve is configured such that when the control valve (3) is opened, gas sequentially flows through the fuel gas inlet (1) and the control valve (3), and then flows toward the fuel gas outlet (2), and the control valve (3) alternately opens and closes an airflow passage by which the gas flows through the control valve (3); and
when the control valve (3) is not opened, the valve core (4) butts against an inner wall of the valve body under the action of the reset device, and then closes an airflow passage by which the gas flowing in from the gas inlet (8) flows toward the gas outlet (9); and
wherein the electromagnetic converting device is used for generating magnetism after receiving the supplied power, drawing the valve core (4) to move, and then opening the airflow passage by which the gas flowing in from the gas inlet (8) flows toward the gas outlet (9); and after the supplied power disappears, the magnetism disappears, and the valve core (4) again butts against the inner wall of the valve body under the action of the reset device,
**characterised in that** the control valve further comprises a containing portion (13) adapting to the shape of the valve core (4) wherein the containing portion (13) is disposed on the inner wall of the valve body between the gas inlet (8) and the gas outlet (9); **in that** the gas outlet (9) is disposed on the nozzle (11) and the gas inlet (8) is disposed on the bushing (10); and **in that** the valve core (4) is of a spherical structure.

2. The gas flow control device according to claim 1, **characterized in that**:
the electromagnetic converting device comprises a coil (5).

3. The gas flow control device according to claim 2, **characterized in that**:
the coil (5) winds around the valve body.

4. The gas flow control device according to claim 1, **characterized in that**:
the reset device comprises a spring (6) or rubber or elastic plastic.

5. The gas flow control device according to claim 1, **characterized in that**:
the control module is used for supplying a periodically changing current to the electromagnetic converting device.

6. The gas flow control device according to claim 1, **characterized in that**:
the control module is used for supplying a pulse-type direct current to the electromagnetic converting device.

7. The gas flow control device according to claim 1, **characterized in that**:
the control module is used for supplying an alternating current to the electromagnetic converting device.

8. The gas flow control device according to claim 1, **characterized in that**:
the bushing (10) is made of a plastic material.

9. The gas flow control device according to any one of claims 1 to 8, **characterized in that**:
an outer surface of the valve core (4) is disposed with a coating, and the coating is a plastic or rubber or epoxy coating.

10. The gas flow control device according to any one of claims 1 to 9, **characterized in that**:
the number of control valves (3) is at least two; and
bore diameters of the gas outlets (9) of the control valves (3) are different from each other.

11. A gas cooker, comprising
the gas flow control device according to any one of claims 1 to 10.

## Patentansprüche

1. Gassteuervorrichtung für einen Gasherd, umfassend:
ein Brenngaseinlass (1), ein Brenngasauslass (2), ein Steuermodul und mindestens ein Steuerventil (3);
wobei
das Steuerventil (3) einen Ventilkörper, einen Ventileinsatz (4), eine Rückstellvorrichtung und eine elektromagnetische Umwandlungsvorrichtung umfasst;
wobei
der Ventilkörper einen Gaseinlass (8), einen Gasauslass (9), eine Buchse (10) und eine Düse (11) umfasst;
wobei
die elektromagnetische Umwandlungsvorrichtung an der Buchse (10) angeordnet ist;
wobei
das Steuermodul dazu dient, das Steuerventil (3) zu öffnen und die der elektromagnetischen Umwandlungsvorrichtung zugeführte Energie zu steuern;
und
das Steuermodul ferner dazu dient, eine Frequenz eines periodischen Öffnungs- und Schließbetriebs des Steuerventils (3) zu steuern;
wobei das mindestens eine Steuerventil so ausgelegt ist, dass, wenn das Steuerventil (3) geöffnet ist, Gas sequentiell durch den Brenngaseinlass (1) und das Steuerventil (3) und dann zum Brenngasauslass (2) strömt, und das Steuerventil (3) einen Luftstromdurchlass abwechselnd öffnet und schließt, über den das Gas durch das Steuerventil (3) strömt,
und
wenn das Steuerventil (3) nicht geöffnet ist, der Ventileinsatz (4) unter Einwirkung der Rückstellvorrichtung gegen eine Innenwand des Ventilkörpers stößt, und sich dann ein Luftstromdurchlass schließt, über den das vom Gaseinlass (8) einströmende Gas zum Gasauslass (9) strömt; und
wobei
die elektromagnetische Umwandlungsvorrichtung dazu dient, nach dem Empfangen der zugeführten Energie einen Magnetismus zu erzeugen, um den Ventileinsatz (4) anzuziehen, um sich zu bewegen, und dann den Luftstromdurchlass zu öffnen, über den das vom Gaseinlass (8) einströmende Gas zum Gasauslass (9) strömt; und wobei, nachdem die zugeführte Energie verschwindet, der Magnetismus verschwindet, und der Ventileinsatz (4) erneut unter Einwirkung der Rückstellvorrichtung gegen die Innenwand des Ventilkörpers stößt,
**dadurch gekennzeichnet, dass** das Steuerventil ferner einen Aufnahmeabschnitt (13) umfasst, der an die Form des Ventileinsatzes (4) angepasst ist, wobei der Aufnahmeabschnitt (13) an der Innenwand des Ventilkörpers zwischen dem Gaseinlass (8) und dem Gasauslass (9) angeordnet ist; dadurch, dass der Gasauslass (9) an der Düse (11) angeordnet ist und der Gaseinlass (8) an der Buchse (10) angeordnet ist; und dadurch, dass der Ventileinsatz (4) eine kugelförmige Struktur hat.

2. Gassteuervorrichtung nach Anspruch 1, **dadurch gekennzeichnet, dass**:
die elektromagnetische Umwandlungsvorrichtung eine Spule (5) umfasst.

3. Gassteuervorrichtung nach Anspruch 2, **dadurch gekennzeichnet, dass**:
die Spule (5) um den Ventilkörper gewickelt ist.

4. Gassteuervorrichtung nach Anspruch 1, **dadurch gekennzeichnet, dass**:
die Rückstellvorrichtung eine Feder (6) oder Gummi oder elastischen Kunststoff umfasst.

5. Gassteuervorrichtung nach Anspruch 1, **dadurch gekennzeichnet, dass**:
das Steuermodul dazu dient, der elektromagnetischen Umwandlungsvorrichtung einen sich periodisch ändernden Strom zuzuführen.

6. Gassteuervorrichtung nach Anspruch 1, **dadurch gekennzeichnet, dass**:
das Steuermodul dazu dient, der elektromagnetischen Umwandlungsvorrichtung einen gepulsten Gleichstrom zuzuführen.

7. Gassteuervorrichtung nach Anspruch 1, **dadurch gekennzeichnet, dass**:
das Steuermodul dazu dient, der elektromagnetischen Umwandlungsvorrichtung einen Wechselstrom zuzuführen.

8. Gassteuervorrichtung nach Anspruch 1, **dadurch gekennzeichnet, dass**:
die Buchse (10) aus einem Kunststoffmaterial besteht.

9. Gassteuervorrichtung nach einem der Ansprüche 1 bis 8, **dadurch gekennzeichnet, dass**:
eine Außenfläche des Ventileinsatzes (4) über eine Beschichtung verfügt und die Beschichtung eine Kunststoff- oder Gummi- oder Epoxidbeschichtung ist.

10. Gasstrom-Steuervorrichtung nach einem der Ansprüche 1 bis 9, **dadurch gekennzeichnet, dass**:
die Anzahl der Steuerventile (3) mindestens zwei ist; und
Bohrungsdurchmesser der Gasauslässe (9) der Steuerventile (3) sich voneinander unterscheiden.

11. Gasherd, umfassend
die Gassteuervorrichtung nach einem der Ansprüche 1 bis 10.

## Revendications

1. Dispositif de contrôle de l'écoulement de gaz pour une cuisinière à gaz, comprenant :
une entrée de gaz combustible (1), une sortie de gaz combustible (2), un module de commande et au moins une vanne de commande (3) ;
dans lequel la vanne de commande (3) comprend un corps de vanne, un noyau de vanne (4), un dispositif de réinitialisation et un dispositif de conversion électromagnétique ;
dans lequel le corps de vanne comprend une entrée de gaz (8), une sortie de gaz (9), une bague (10) et une buse (11) ;
dans lequel le dispositif de conversion électromagnétique est disposé sur la bague (10) ;
dans lequel le module de commande est utilisé afin d'ouvrir la vanne de commande (3) et de commander l'alimentation fournie au dispositif de conversion électromagnétique ; et
le module de commande est en outre utilisé afin de commander une fréquence d'une opération d'ouverture et de fermeture régulière de la vanne de commande (3) ;
dans lequel la au moins une vanne de commande est configurée de sorte que lorsque la vanne de commande (3) est ouverte, le gaz s'écoule de manière séquentielle à travers l'entrée de gaz combustible (1) et la vanne de commande (3), puis s'écoule vers la sortie de gaz de combustible (2), et la vanne de commande (3) ouvre et ferme alternativement un passage d'écoulement d'air par lequel le gaz s'écoule à travers la vanne de commande (3) ; et
lorsque la vanne de commande (3) n'est pas ouverte, le noyau de vanne (4) vient en butée contre une paroi interne du corps de vanne sous l'action du dispositif de réinitialisation, puis ferme un passage d'écoulement d'air par lequel le gaz s'écoulant depuis l'entrée de gaz (8) s'écoule vers la sortie de gaz (9) ; et
dans lequel le dispositif de conversion électromagnétique est utilisé afin de générer un magnétisme après réception de l'alimentation fournie, d'amener le noyau de vanne (4) à se déplacer, puis d'ouvrir le passage d'écoulement d'air par lequel le gaz s'écoulant à l'intérieur depuis l'entrée de gaz (8) s'écoule vers la sortie de gaz (9) ; et une fois que l'alimentation fournie disparait, le magnétisme disparait, et le noyau de vanne (4) vient à nouveau en butée contre la paroi interne du corps de vanne sous l'action du dispositif de réinitialisation,
**caractérisé en ce que** la vanne de commande comprend en outre une partie de contenant (13) s'adaptant à la forme du noyau de vanne (4), dans lequel la partie de contenant (13) est disposée sur la paroi interne du corps de vanne entre l'entrée de gaz (8) et la sortie de gaz (9) ; **en ce que** la sortie de gaz (9) est disposée sur la buse (11) et l'entrée de gaz (8) est disposée sur la bague (10) ; et **en ce que** le noyau de vanne (4) est de structure sphérique.

2. Dispositif de contrôle de l'écoulement de gaz selon la revendication 1, **caractérisé en ce que** :
le dispositif de conversion électromagnétique comprend une bobine (5).

3. Dispositif de contrôle de l'écoulement de gaz selon la revendication 2, **caractérisé en ce que** :
la bobine (5) s'enroule autour du corps de vanne.

4. Dispositif de contrôle de l'écoulement de gaz selon la revendication 1, **caractérisé en ce que** :
le dispositif de réinitialisation comprend un ressort (6) ou un caoutchouc ou un plastique élastique.

5. Dispositif de contrôle de l'écoulement de gaz selon la revendication 1, **caractérisé en ce que** :
le module de commande est utilisé afin de fournir un courant qui change périodiquement au dispositif de conversion électromagnétique.

6. Dispositif de contrôle de l'écoulement de gaz selon la revendication 1, **caractérisé en ce que** :
le module de commande est utilisé afin de fournir un courant continu de type à impulsion au dispositif de conversion électromagnétique.

7. Dispositif de contrôle de l'écoulement de gaz selon la revendication 1, **caractérisé en ce que** :
le module de commande est utilisé afin de fournir un courant alternatif au dispositif de conversion électromagnétique.

8. Dispositif de contrôle de l'écoulement de gaz selon la revendication 1, **caractérisé en ce que** :
la bague (10) est réalisée en matière plastique.

9. Dispositif de contrôle de l'écoulement de gaz selon l'une quelconque des revendications 1 à 8, **caractérisé en ce que** :
une surface extérieure du noyau de vanne (4) est disposée avec un revêtement, et le revêtement est un revêtement plastique ou en caoutchouc ou époxy.

10. Dispositif de contrôle de l'écoulement de gaz selon l'une quelconque des revendications 1 à 9, **caractérisé en ce que** :
le nombre de vannes de commande (3) est au moins de deux ; et
des diamètres d'alésage des sorties de gaz (9) des vannes de commande (3) sont différents les uns des autres.

11. Cuisinière à gaz, comprenant :
le dispositif de contrôle de l'écoulement de gaz selon l'une quelconque des revendications 1 à 10.
